# EUROPEAN PATENT SPECIFICATION

(11) **EP 2 688 758 B1**
(45) Date of publication and mention of the grant of the patent: **28.06.2017**
(21) Application number: 12707999.4
(22) Date of filing: 02.03.2012
(51) Int. Cl.: F25B 6/00, F25B 19/00, F25B 41/04, F25D 11/00, B60H 1/32, B60P 3/20, F25B 5/02

(54) **APPARATUS AND METHOD FOR OPERATING A REFRIGERATION SYSTEM HAVING TWO OR MORE CHAMBERS**
VORRICHTUNG UND VERFAHREN ZUM BETREIBEN EINER KÄLTEANLAGE MIT ZWEI ODER MEHREREN KAMMERN
APPAREIL ET PROCÉDÉ PERMETTANT DE FAIRE FONCTIONNER UN SYSTÈME DE RÉFRIGÉRATION AYANT DEUX OU PLUSIEURS CHAMBRES

(30) Priority: 22.03.2011 DE 102011014746
(43) Date of publication of application: 29.01.2014
(73) Proprietor: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Inventor: LÜRKEN, Franz, 47906 Kempen (DE); HENRICH, Helmut, 50259 Pulheim (DE)
(74) Representative: Mellul-Bendelac, Sylvie Lisette
(86) International application number: PCT/EP2012/053644
(87) International publication number: WO 2012/126711

(56) References cited:
- GB-A- 2 437 828
- US-A- 5 129 235
- US-A- 5 168 713

## Description

The present invention relates to an apparatus and a method for operating a refrigeration system having two or more chambers separate and/or thermally insulated from each other.

Apparatuses and methods for the refrigeration of chambers, in particular of storage spaces and transport spaces in refrigeration vehicles, are known in the prior art, which for cooling use compression refrigerating machines, heat exchanger-bound evaporation and/or direct injection of a low-temperature liquefied gas, in particular liquid nitrogen. These refrigeration systems can be adapted to many different situations, and therefore there are many different approaches for the refrigeration of refrigeratable stock in storage spaces, long-distance transporters and delivery traffic with frequent loading or unloading operations.

A highly flexible system having a plurality of chambers which can be maintained at different temperatures is described, for example, in WO 2009/156384 A3. This also addresses the problem of the heating of chambers and of defrosting.

US 5 129 235 discloses an apparatus according to the preamble of claim 1 and a method according to the preamble of claim 11. To be precise, a particular challenge arises when the ambient conditions of the refrigeration space and/or the requirements as to the storage temperatures of the refrigeratable stock and/or the transport conditions in the case of refrigeration transports demand not only continuous refrigeration, but also occasional heating of at least one of the chambers. The heating of the chambers may be necessary, inter alia, when the refrigeration space is in an environment which has a lower temperature than the desired temperature of the refrigeration space or refrigeratable goods with different desired temperatures are transported in a vehicle having a plurality of chambers and sufficient insulation between the chambers cannot be ensured. This difficulty arises particularly when transporters subdivided in the longitudinal direction are used, the result being that there may be undesirable heat transmission between the chambers having different desired temperatures. The need for different desired temperatures occurs, for example, when frozen goods are to be transported at temperatures of, for example, -20°C in one chamber, but fresh goods with a desired temperature of a few degrees Celsius above freezing point are to be transported in another, adjacent chamber.

Moreover, in the case of the fine distribution of refrigeratable goods in the provisioning of large-scale consumers, the frequent opening and closing of the chambers during loading and unloading operations entail a cold loss which has to be compensated as quickly as possible in order to prevent adverse effects of the heat entering on the refrigeratable stock. For this purpose, it is known to implement the required brief sharp cooling of the refrigeration space by means of the high cooling capacity of the heat exchanger-bound evaporation of low-temperature liquefied gas or the direct injection of the latter into the refrigeration space. Deliberate overdimensioning of compression refrigerating machines in order thereby to achieve sharp cooling is likewise carried out, the result of this being, however, that optimal efficiency of these assemblies in continuous operation can no longer be achieved.

Furthermore, in the case of intensive and/or lengthy uninterrupted use of refrigeration circuits, the need regularly arises to de-ice the heat exchangers, used for heat transmission, in the chambers, as a result of which refrigeration has to be temporarily interrupted and therefore, in turn, costs and losses of refrigeration time are incurred for the operators of these refrigeration systems.

The object of the invention, therefore, is to specify an apparatus for the economical simultaneous refrigeration and/or heating and/or defrosting of at least two chambers which have different refrigeration and/or heating requirements. A refrigeration method is likewise to be specified, by means of which the problems described can be solved. In particular, the consumption of energy in refrigeration vehicles is to be reduced and therefore their range and/or period of use, even under unfavourable operating conditions, are to be increased. For this purpose, a control is required which switches the cold sources in such a way that both sufficient refrigerating or heating capacity is always present in each chamber and this capacity is provided at the same time with a minimal use of primary energy in each case, without the possibility of pressure compensation between the heat exchangers occurring on the expansion side of the latter.

A refrigeration and/or heating apparatus according to Claim 1 and a refrigeration and/or heating method according to Claim 11 serve for achieving this object. Advantageous refinements of the invention which may be used individually and in expedient combinations with one another are specified in the respective dependent claims.

A refrigeration and/or heating apparatus according to the invention for refrigeration and/or heating of at least a first and a second chamber has in each chamber a first heat exchanger for refrigeration by means of a heat transport medium and a second heat exchanger for heating. In this case, the heat transport medium for all the chambers is routed in a common closed heat transport circuit which has at least a first compressor for compressing and heating the heat transport medium and a collecting vessel for the expansion and further cooling of the heat transport medium, into which heat transport circuit the first heat exchangers are incorporated, in each case parallel to one another and in each case provided with a refrigeration circuit valve, between the collecting vessel and compressor. According to the invention, there is a main line with a main valve in the heat transport circuit between the compressor and the cooler, whereby the second heat exchangers are each provided with a shut-off valve and are connected in parallel to each other to the heat transport circuit such that each of them can bridge the main valve. This makes it possible, as required, to conduct compressed hot heat transport medium through the second heat exchanger of one of the chambers when heat is required there for increasing the temperature or for defrosting one of the heat exchangers. As a result of the complete or partial closing of the main valve and the opening of the shut-off valve of at least one second heat exchanger, compressed hot heat transport medium can flow through this heat exchanger. Expediently, in general, the first heat exchanger of the same chamber will not be cooled simultaneously, that is to say the associated refrigeration circuit valve should in this case be closed. Thus, the chamber is heated and/or the heat exchangers there are defrosted. By the adapted switching of the valves, different states can be set in the various chambers or specific desired temperatures can be maintained. A particular advantage is that additional energy does not have to be used for heating a chamber, but, instead, the energy introduced via the compressor can be utilized, while at the same time the cooling, necessary in any case later, of the compressed heat transport medium is partially performed by the chamber to be heated, this being highly beneficial in energy terms.

The use of two heat exchangers in each chamber, in conjunction with a single main valve and a refrigeration circuit valve and one shut-off valve per chamber in a common closed heat transport circuit for selecting various operating states of the system, makes it possible to have a method, highly efficient in terms of the outlay for an automatic control, for adapting the refrigeration system to differing requirements in the chambers. According to the invention, a temperature sensor unit in each chamber and the main valve and also the shut-off valves and the refrigeration circuit valves are connected to an automatic control unit via control lines, the automatic control unit making it possible to change over between the different operating states of the heat transport circuit. What is particularly advantageous is the changeover between a first state, in which the heat transport medium, after its cooling and expansion, can flow through the first heat exchangers of all the chambers, whereas the heat exchanger medium cannot flow through the second heat exchangers of all the chambers, and a second state, in which the heat transport medium, after its cooling and expansion, cannot flow through the first heat exchanger of at least one of the chambers, but the compressed heat transport medium, before its cooling and expansion, can flow through the second heat exchanger.

The changeover between the states which is coordinated by the automatic control unit takes place on the basis of the system information recorded by the temperature sensor unit and external conditions, in combination with stipulated desired temperatures in the chambers and the refrigeration or heating demand in the chambers which is calculated from this. Between the first state, in which all the chambers are refrigerated simultaneously, and the second state, in which at least one chamber is heated, the main valve makes it possible in an especially simple way to adapt the system to its current circumstances. The circumstances of the system are in this case defined essentially by two aspects. On the one hand, by the external conditions, in particular the outside temperature, and, on the other hand, by the properties and requirements of the refrigeratable stock. If the outside temperature lies, for example, approximately at the level of the desired temperature of one of the chambers, the refrigeration demand of this chamber is virtually zero, in another chamber in which the desired temperature lies markedly below the outside temperature refrigeration is necessary, and a chamber having a desired temperature which lies above the outside temperature has to be heated in order to avoid harmful undertemperatures. If the outside temperature lies, for example, at 0°C, a fresh service chamber having a desired temperature of about 7°C must be heated, whereas a freezing chamber which may be adjacent, having a desired temperature of about -18°C, must be cooled at the same time.

By a common heat transport circuit being used for refrigerating and heating different chambers, the energy required for operating the compressors is utilized especially effectively, since the waste heat necessarily occurring does not necessarily have to be discharged into the environment, but, instead, can be used for heating a refrigeration space.

In a further advantageous refinement of the invention, each chamber of the cooling apparatus has, furthermore, means for refrigeration with liquid nitrogen, in particular a third heat exchanger through which low-temperature nitrogen can flow. The third heat exchanger of each chamber is preferably used for sharp cooling, liquid nitrogen being delivered from a nitrogen tank to a chamber and being evaporated there, the heat required for the evaporation being extracted from the corresponding chamber. Sharp cooling is understood in the context of the present invention to mean cooling which is distinguished particularly by a high introduction of cold per unit time into a chamber for a short time, that is to say a high brief cooling capacity, and which therefore lowers the temperature in the chamber very quickly.

The use of low-temperature liquefied nitrogen in the refrigeration system makes it possible to implement efficiently the sharp cooling of the chambers which is often required, particularly in fine distribution, and which occurs particularly due to the ingress of heat from outside into the chamber in the event of frequent opening. Sharp cooling or constant cooling with liquid nitrogen is known in the prior art. In the present invention, the simultaneous presence of a plurality of refrigeration systems allows especially flexible use under different conditions and in the case of different costs of individual types of energy. The regulation of the temperature in the chambers in this case may be performed for all systems by the automatic control unit which, on the one hand, can regulate the distribution of nitrogen to the third heat exchangers of the chambers with the aid of nitrogen valves arranged at the respective inlet or outlet and, at the same time, can coordinate the refrigeration of these and/or the refrigeration and/or heating of other chambers in the refrigeration system via the heat transport medium circuit. By the various operating states of the heat medium circuit and their selection via the main valve being utilized, the refrigeration system can react to different ambient conditions and set the required desired temperatures for each chamber by the efficient utilization of the available energy resources. In this case, the provision of energy is divided between the heat transport circuit and the nitrogen system in such a way that the consumption of primary energy is minimized and the refrigeration capacity is adapted at every time point to the refrigeration demand. It is advantageous, furthermore, if the automatic control system executes at regular intervals a self test in which the functioning capacity of the system components is checked, and, if appropriate, provides emergency operating states which keep refrigeration and/or heating in operation without safety risks in the event of the failure of one or more system components by using another system component at least for a bridging time.

It is especially advantageous if, in each chamber, the heat exchangers are arranged in a common heat exchanger column, preferably one above the other. The heat exchangers can thereby be integrated into a common refrigeration module which is configured in such a way that the third heat exchanger for nitrogen refrigeration assumes the highest position in the chamber, the first heat exchanger for refrigeration by means of the heat transport circuit is arranged beneath it, and the second heat exchanger for heating the chamber assumes the lowest position.

In an embodiment of the invention, the main valve is arranged in the heat transport circuit of the heat transport medium between the first compressor and the cooler. Between the compressor and the main valve, a branch line branches off, which is connected in parallel to the second heat exchanger of each chamber. A return line leads from the second heat exchanger of each chamber to the circuit, which ends between the main valve and the cooler, each second heat exchanger being assigned a shut-off valve in the branch line or in the return line. By the main valve being closed, therefore, the heat transport medium, before flowing through the cooler, can be conducted through the second heat exchangers of the chambers, if the associated shut-off valves are open. Closing of the shut-off valve of a heat exchanger, of course, prevents the heat transport medium from flowing through the chamber. It should be pointed out, however, that automatic control may also include the partial opening or closing of valves. Not only switching valves, but also regulating valves, may therefore be used.

In connection with refrigeration circuit valves upstream of each chamber, for which the closing by the automatic control unit prevents the flow of the heat transport medium to the first heat exchangers assigned to the respective chamber, it is therefore possible to set a multiplicity of operating states in order to adapt the system to the different conditions. If, furthermore, the nitrogen flow to the first heat exchangers of the chambers is controlled by opening or closing nitrogen valves via the automatic control unit, the number of operating states of the refrigeration system is increased further and its possibilities of use broadened. The possible operating states thus comprise, in particular, the cooling and/or sharp cooling of a chamber, at the same time as the defrosting of the first heat exchanger of another chamber and/or the heating of another chamber. The provision and use of energy can therefore be regulated in a highly flexible way and be adapted to the different desired temperatures arising during the operation of the refrigeration system. The properties described here with reference to two chambers can readily be transferred to three or more chambers when their first and second heat exchangers are in each case connected in parallel to one another. The flexibility of the system even increases with the number of chambers. The energy source used may in each case be the most beneficial energy available, which may depend not only on the price, but also on availability. If, for example, a connection to an electrical network is available in a parking position to a refrigeration vehicle having a refrigeration apparatus according to the invention, this electrical network can be used for operating the compressor. What are considered as a backup and merely temporarily are the electrical on-board power pack when the vehicle is stationary, the mechanical driving of the compressor via a vehicle engine during driving and, finally, the use of liquid nitrogen.

In a further advantageous refinement of the invention, the first heat exchanger and the second heat exchanger of each chamber are connected heat-conductively to one another. As a result, heat can be supplied to the first heat exchanger from the second heat exchanger such that the first heat exchanger is de-iced. Thus, low-maintenance operation of the refrigeration system can be ensured, particularly when the de-icing intervals for the first heat exchanger are controlled automatically via the automatic control unit as a function of the duration, intensity and frequency of use of the said heat exchanger, and the user of the refrigeration system therefore no longer needs to carry out the de-icing of the heat exchangers manually.

In a further advantageous refinement of the invention, a circulating-air fan is mounted in each chamber such that the air in the associated chamber can be conducted as circulating air through the heat exchangers. The air circulation caused by the fan in the chamber allows efficient utilization of the refrigerating or heating capacity of the heat exchangers and also a uniform distribution of the cold or heat in a chamber. In this case, the flow of air through the heat exchangers generates improved heat transition at the heat exchangers. The refrigerating or heating capacity is increased when the fan blows strongly, but if it blows weakly the refrigerating or heating capacity is lower. Via a feedback to the automatic control unit, the fan power can be incorporated into the automatic control and adapted individually to the requirements of each chamber. The circulating-air fan can likewise be integrated into the refrigeration module having the heat exchangers, with the result that the structural elements required for refrigerating a chamber are arranged in a compact, easy-to-maintain and, where appropriate, easily exchangeable unit.

It is especially advantageous if a vehicle is equipped with the refrigeration apparatus according to the invention and, in particular, the vehicle engine drives a second compressor mechanically. The use of two selectively usable compressors or of one compressor with differing drives increases the operating reliability and availability of the overall system.

The details and advantages disclosed for the refrigeration apparatus according to the invention can be transferred and applied to a method according to the invention, and vice versa. The refrigeration method according to the invention for setting desired temperatures in at least a first and a second chamber by means of a heat transport medium, the heat transport medium circulating in a common closed heat transport circuit and being compressed and heated in a compressor, cooled in at least one cooler and supplied for expansion and further cooling to an expansion apparatus, is distinguished in that there can be a changeover between different operating states of the heat transport circuit by means of valves, with the result that the heat transport medium can be supplied, selectively compressed and hot or, after cooling and expansion, cold, to the chambers. Thus, the heat supplied to the heat transport medium by the compressor can, in order to keep the refrigeration circuit in circulation, profitably be used for heating or defrosting a chamber, instead of being discharged into the environment in the cooler. This saves energy and outlay in terms of apparatus.

A refrigeration method is preferred in which an automatic control unit controls the valves in such a way that a changeover can be made at least between a first operating state of the heat transport circuit, in which the heat transport medium, after its cooling and expansion, flows through all the chambers, and a second operating state of the heat transport circuit, in which the heat transport medium, after its cooling and expansion, does not flow through at least one of the chambers, but instead, the compressed heat transport medium, before its cooling and expansion, flows through at least one of the chambers.

An advantageous refinement of the refrigeration method arises when each chamber has at least a first heat exchanger for refrigeration and a second heat exchanger for heating or defrosting, the heat transport medium being conducted at least partially via a main valve mounted between the compressor and the cooler into a branch line, being supplied to the second heat exchanger of at least one of the chambers via the branch line and being routed from the second heat exchangers of each chamber via a return line into the line between the main valve and the cooler, and the supply of heat transport medium to one of the second heat exchangers being capable of being prevented by closing a shut-off valve, assigned to the second heat exchanger, in the branch line or in the return line. To maintain the heat transport circuit, it is necessary for the latter not to be interrupted completely. Consequently, either the main valve must be completely or partially open or at least one second heat exchanger must be switched for the throughflow of heat transport medium. Expediently, a chamber will not be heated and cooled simultaneously, so that, apart from control-based exceptions, only either the first or the second heat exchanger of the same chamber should be switched for allowing throughflow.

In addition to the measures described, if required, each chamber may also be cooled in a way known per se by means of liquid low-temperature nitrogen, this being advantageous particularly after loading and unloading operations. Combination with the other method steps makes it possible to operate a refrigeration transporter especially economically and increases its range or period of use.

The invention and technical background are explained in more detail below by way of example by means of the drawing. It should be pointed out that the figures show especially preferred design variants of the invention, although the invention is not restricted to these. In the drawing:
Fig. 1 shows a diagrammatical illustration of a refrigeration apparatus according to the invention.
Fig. 2 shows diagrammatically a refrigeration vehicle having a refrigeration apparatus according to the invention.

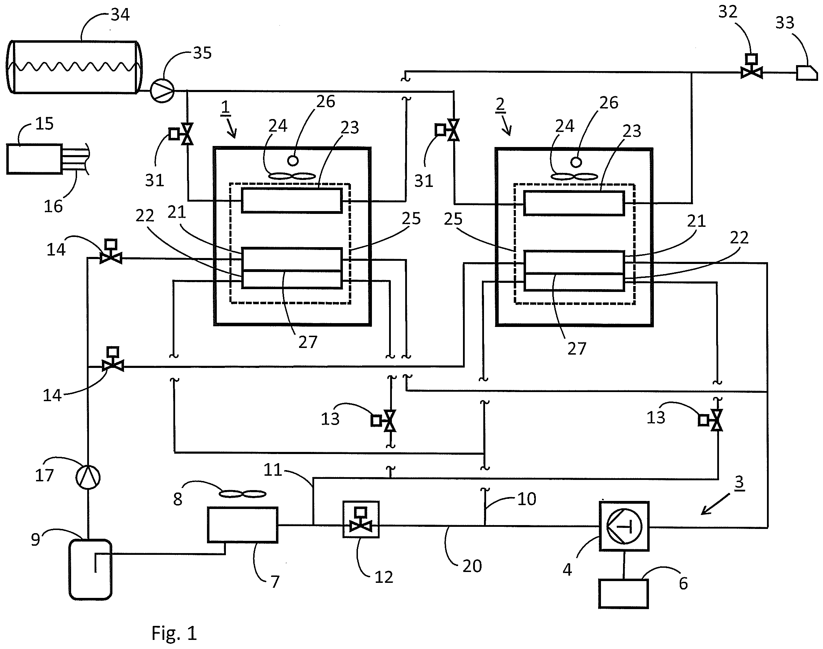

Figure 1 shows diagrammatically an exemplary embodiment of the invention in which the provision of cold or heat for a first 1 and a second 2 chamber being thermally insulated from each other according to the present invention is illustrated. The principle described here by means of two chambers 1, 2 can be extended in a similar way to three or more chambers by connecting the corresponding components in parallel. The required cold or heat is provided by a closed heat transport circuit 3 or separate nitrogen refrigeration. A heat transport medium, such as is typically used in refrigeration circuits, is kept in motion in the heat transport circuit 3 by a first compressor 4 and, if appropriate, by a pump 17. The first compressor 4, which is driven via a compressor drive 6, compresses and heats the heat transport medium. Then, as is known for typical refrigerating circuits, the latter passes via a main line 20 to a cooler 7 which is assigned a fan 8 for the discharge of heat. Here, the compressed heat transport medium is cooled by the discharge of heat into the surroundings and passes in the liquid phase into a collecting vessel 9 in which it cools further by expansion. The main line 20 is subsequently divided into two lines which supply the heat transport medium to the chambers 1, 2. The refrigeration of the chambers 1, 2 by the heat transport medium takes place in a first heat exchanger 21 which is located in each chamber 1, 2 and which is assigned in each case a refrigeration circuit valve 14 for regulating the inflow of heat transport medium. The heat transport medium is subsequently conducted back into the main line 20 again and supplied anew to the first compressor 4. Mounted additionally in the main line 20, between the compressor 4 and cooler 7, is a main valve 12, by the closing of which the direct inflow of the heat transport medium to the cooler 7 can be prevented. Instead, with the main valve 12 closed completely or partially, the heat transport medium flows through into a branch line 10 which branches off from the main line 20 between the first compressor 4 and main valve 12. The branch line 10 is divided into two lines which can supply the heat transport medium to a second heat exchanger 22 in each of the chambers 1, 2. The heat transport medium passes from the second heat exchanger 22 of each chamber 1, 2 to a return line 11 which issues into the main line 20 between the main valve 12 and the cooler 7. Furthermore, to regulate the inflow of heat medium, each second heat exchanger 22 is assigned a shut-off valve which may be located upstream or downstream of the second heat exchanger 22 and, in this exemplary embodiment of the invention, is arranged downstream of the latter. By the main valve 12 being closed, the heat transport medium is therefore supplied, before its cooling, to one of the chambers 1, 2 and can consequently discharge heat via the second heat exchanger 22 to the respective chambers 1, 2 in order to heat these. Since the first heat exchangers 21 and the second heat exchangers 22 in each chamber 1, 2 are connected by means of a heat-conducting connection 27, the inflow of the heat medium into the second heat exchangers 22 can also be utilized for de-icing the first heat exchanger 21 of the chambers 1, 2.

In the event that the refrigerating capacity of the heat transport circuit 3 is not sufficient to reach the desired temperatures in the chambers 1, 2, the refrigeration system additionally has separate nitrogen refrigeration which is supplied from a nitrogen tank 34 with liquid, low-temperature nitrogen. With the aid of a nitrogen pump 35, liquid nitrogen is extracted from the nitrogen tank 34 and supplied via nitrogen lines to the chambers 1, 2 after the nitrogen lines have been divided, the inflow of the nitrogen being regulatable with the aid of nitrogen valves 31 assigned to each of the chambers 1, 2. A third heat exchanger 23 for evaporating the liquid nitrogen is installed in the chambers 1, 2 in a way known per se, with the result that heat is extracted from the chambers 1, 2 and these are therefore cooled indirectly. After evaporation, the then gaseous nitrogen is discharged into the surroundings via a nitrogen blow-off 33.

The first, second and third heat exchangers 21, 22, 23 of each chamber 1, 2 are arranged one above the other in a heat exchanger column 25, the third heat exchanger 23 assuming the uppermost position, the first heat exchanger 21 the middle position and the second heat exchanger 22 the lowermost position. Above the heat exchanger column 25 is installed a circulating-air fan 24 which causes the air to circulate in the respective chamber 1, 2 and therefore distribution of the transmitted cold or heat. Furthermore, the circulating-air fan 24 generates a flow of air through the heat exchanger column 25, thus, on the one hand, leading to improved heat transmission, but, on the other hand, also influencing the refrigerating or heating capacity by the intensity of the ventilation. This refrigerating or heating capacity is in this case controlled by an automatic control unit 15 which obtains information data on the current temperatures in the chambers from a sensor unit 26 via control lines 16 and balances this information data with stipulated desired temperatures. Furthermore, the automatic control unit 15 is connected via the control lines 16 to the main valve 12, the shut-off valves 13, the refrigeration circuit valves 14 and the nitrogen valves 31 and can open and close these in such a way that the refrigeration system can assume various operating states for refrigerating and/or heating the chambers 1, 2, while different desired temperatures can be set in the two chambers 1, 2.

For example, by the main valve 12 being closed, the heat transport medium can be routed into the branch line 10 and from this further on into the second heat exchanger 22 of the first chamber 1 in that the shut-off valve 13 assigned to the first chamber is opened, the shut-off valve 13 of the second chamber 2 simultaneously being closed. The heat transport medium therefore in this case does not flow through the second heat exchanger 22 of the second chamber 2, and the heat transport medium, after being recirculated into the return line 11 and after being coded in the cooler 7, is supplied only to the first heat exchanger 21 of the second chamber 2 in that the refrigeration circuit valve 14 assigned to the second chamber 2 remains open, but that of the first chamber 1 is closed. Thus, the first chamber 1 is heated and the second chamber 2 is simultaneously cooled. It is important in this case that the refrigeration circuit is cooled via the discharge of heat energy, without expansion of the refrigerating medium occurring. This makes it possible to use the energy resources in a highly efficient way. A simultaneous need for cooling of one chamber and for heating of another chamber may occur, for example, when the desired temperature of the one chamber lies below the outside temperature, but that of the other lies above the outside temperature.

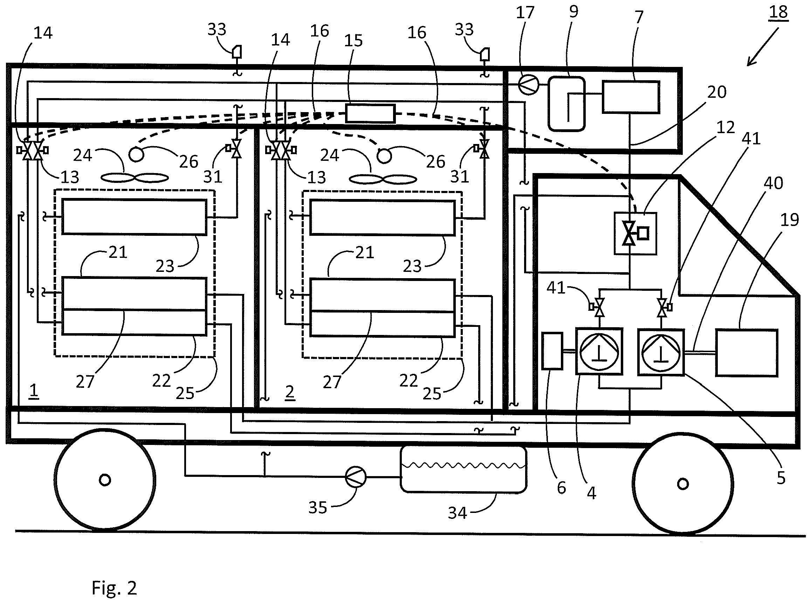

Figure 2 shows diagrammatically a refrigeration vehicle 18 having a refrigeration apparatus according to the invention for refrigerating or heating two chambers 1, 2, as described with reference to Fig. 1. The chambers 1, 2 are thermally insulated from each other as far as possible with the restricted space on a vehicle. That is to say there may be a certain remaining heat exchange between the chambers. Identical components are provided with identical reference symbols. The refrigeration system for the refrigeration vehicle 18 contains again a main valve 12 in a main line 20, a cooler 7, a fan 8, a collecting vessel 9, a pump 17, shut-off valves 13, refrigeration circuit valves 14, a branch line 10, a return line 11, a nitrogen tank 34, a nitrogen pump 35, nitrogen valves 31 and a nitrogen blow-off 33. Installed in each of the refrigeration spaces 1, 2 is a heat exchanger column 25 which consists of a first heat exchanger 21, of a second heat exchanger 22 and of a third heat exchanger 23 which are arranged one above the other, the third heat exchanger 23 assuming the uppermost position, the first heat exchanger 21 the middle position and the second heat exchanger 22 the lowermost position. A circulating-air fan 24 is installed above the heat exchanger column 25 in each chamber.

Furthermore, the refrigeration vehicle 18 has a first compressor 4 which is operated via an electric compressor drive 6 and a second compressor 5 which is connected in parallel to the first compressor 4 and is driven by an engine 19 of the vehicle 18 via a mechanical connection 40. The stream of heat transport medium is in this case regulated with the aid of compressor valves 41 and is compressed either by the first 4 or the second 5 compressor. During the operation of the engine 19, that is to say particularly while the refrigeration vehicle 18 is travelling along, the second compressor 5 operated by the engine 19 via the mechanical connection 40 is in this case used primarily and the assigned compressor valve 41 is opened, the compressor valve 41 assigned to the first compressor 4 being closed. When the engine 19 is switched off, the operation of the heat transport circuit 3 is ensured via the first compressor 4 and the compressor valves 41 are correspondingly opened or closed. The electric compressor drive 6 is in this case operated preferably by means of an external voltage source with 24V, 230V or 400V, but alternatively the on-board voltage or a voltage which is generated by a generator can also be used for the compressor drive 6.

For regulating the refrigeration system according to the invention in the refrigeration vehicle 18, once again, an automatic control unit 15 is provided which is connected via control lines 16 to the components to be regulated. Further, the automatic control unit is connected to a sensor unit 26 and to the circulating-air fan 24 in each chamber 1, 2 via the control lines 16.

In one exemplary embodiment, the first chamber 1 is operated for refrigerating fresh goods having a desired temperature above freezing point, especially preferably +7°C, and the second chamber 2 is operated as a freezing chamber at a desired temperature below freezing point, especially preferably of -18°C. This gives rise, for the two chambers 1, 2, to different refrigeration requirements, which can be fulfilled especially efficiently by means of the refrigeration system according to the invention. An outside temperature above +7°C, for example, requires refrigeration of both chambers 1, 2, which can be achieved in that the main valve 12 is opened and the heat transport medium therefore does not flow through the second heat exchangers 22 of the chambers 1, 2 and no heat is discharged to the chambers 1, 2. By the two refrigeration circuit valves 14 being opened, the flow passes through the two first heat exchangers 21, with the result that both chambers 1, 2 are refrigerated. The higher refrigeration demand of the second chamber 2 can be covered by means of the automatic control unit 15 in that the circulating-air fan 24 of the second chamber 2 blows more strongly than that of the first chamber 1 and thereby ensures a greater transmission of heat in the first heat exchanger 21 of the second chamber 2 than in the first heat exchanger 21 of the first chamber 1, and there is therefore a higher refrigerating capacity in the second chamber 2. In addition, with increased refrigeration demand, the refrigerating capacity in the second chamber 2 can be increased by opening the corresponding nitrogen valve 31, in order to reach the necessary desired temperature. In a further preferred variant, the refrigeration circuit valves 14 are designed to be regulatable, so that the heat transport medium stream and therefore the refrigerating capacity can be apportioned in different fractions for the first heat exchangers 21 of the chambers 1, 2. In the present example, therefore, a larger fraction of the heat transport medium would be conducted into the first heat exchanger 21 of the second chamber 2 and thus increase the refrigerating capacity in the latter.

The present invention is suitable especially for refrigeration vehicles which are used for delivery to foodstuff markets and the like and have two or more chambers having different desired temperatures. In this case, particularly, combination with nitrogen refrigeration by means of liquid nitrogen is advantageous, because other refrigerating components do not have to be designed for especially high peak capacities and can therefore be adapted especially well to the energy-serving double functions according to the invention.

### List of reference symbols

- 1: First chamber
- 2: Second chamber
- 3: Heat transport circuit
- 4: First compressor
- 5: Second compressor
- 6: Compressor drive
- 7: Cooler
- 8: Fan
- 9: Collecting vessel
- 10: Branch line
- 11: Return line
- 12: Main valve
- 13: Shut-off valve
- 14: Refrigeration circuit valve
- 15: Automatic control unit
- 16: Control lines
- 17: Pump
- 18: Vehicle
- 19: Vehicle engine
- 20: Main line
- 21: First heat exchanger
- 22: Second heat exchanger
- 23: Third heat exchanger
- 24: Circulating-air fan
- 25: Heat exchanger column
- 26: Temperature sensor unit
- 27: Heat-conducting connection
- 31: Nitrogen valve
- 32: Nitrogen outlet valve
- 33: Nitrogen blow-off
- 34: Nitrogen tank
- 35: Nitrogen pump
- 40: Mechanical connection
- 41: Compressor valve

## Claims

1. Refrigeration and/or heating apparatus having at least a first (1) and a second (2)chamber thermally insulated from each other, each chamber (1, 2) having a first heat exchanger (21) for refrigeration by means of a heat transport medium and having a second heat exchanger (22) for defrosting and/or for heating of the chamber (1, 2) in case that its temperature is below a predetermined temperature, and the heat transport medium for all chambers (1, 2) being routed in a common closed heat transport circuit (3) which has at least a first compressor (4) for compressing and heating the heat transport medium and at least one cooler (7) for cooling the compressed heat transport medium and also at least one collecting vessel (9) for the expansion and further cooling of the heat transport medium, into which heat transport circuit (3) the first heat exchangers (21) are incorporated, in each case parallel to one another and in each case provided with a refrigeration circuit valve (14), between the collecting vessel (9) and the compressor (4), **characterized in that** there is a main line (20) with a main valve (12) in the heat transport circuit (3) between the compressor (4) and the cooler (7) and **in that** the second heat exchangers (22) are each provided with a shut-off valve (13) and are connected in parallel to each other to the heat transport circuit (3) such that each of them can bridge the main valve (12), wherein between the compressor (4) and the main valve (12), a branch line (10) branches off, which is connected in parallel to the second heat exchanger (22) of each chamber (1, 2), allowing, as a function of the temperatures in the chambers (1, 2), different operating states of the heat transport circuit (3), and notably the fact that when a given chamber needs to be heated, the compressed heat transport medium, before its cooling and expansion, can flow through the second heat exchanger (22) of the considered chamber but cannot flow through the first heat exchanger (21) of said considered chamber.

2. Refrigeration and/or heating apparatus according to Claim 1, **characterized in that** a temperature sensor unit (26) in each chamber (1, 2) and the main valve (12) and also the shut-off valves (13) and the refrigeration circuit valves (14) are connected to an automatic control unit (15) via control lines (16), and the automatic control unit (15) being designed to control said different operating states of the heat transport circuit (3) as a function of the temperatures in the chambers (1, 2).

3. Refrigeration and/or heating apparatus according to Claim 2, **characterized in that** said automatic control unit (15) allows in particular a first state, in which the heat transport medium, after its cooling and expansion, can flow through the first heat exchangers (21) of all the chambers (1, 2), whereas the heat transport medium cannot flow through the second heat exchangers (22) of all the chambers (1, 2), and a second state, in which the heat transport medium cannot flow through the first heat exchanger (21) of at least one of the chambers (1, 2), but the compressed heat transport medium, before its cooling and expansion, can flow through the second heat exchanger (22) of this chamber.

4. Refrigeration and/or heating apparatus according to one of Claims 1 to 3, **characterized in that** each chamber (1, 2) additionally has means for refrigeration with low-temperature, preferably liquid nitrogen, in particular a third heat exchanger (23) through which the low-temperature nitrogen can flow.

5. Refrigeration apparatus according to one of Claims 1 to 4, **characterized in that**, in each chamber (1, 2), the heat exchangers (21, 22, 23) are arranged in a common heat exchanger column (25), preferably one above the other.

6. Refrigeration apparatus according to one of Claims 1 to 5, **characterized in that** a return line (11) leads from the second heat exchanger (22) of each chamber (1, 2) to the circuit, which ends between the main valve (12) and the cooler (7), the shut-off valve (13) of each second heat exchanger (22) being arranged in the branch line (10) or in the return line (11).

7. Refrigeration apparatus according to one of Claims 1 to 6, **characterized in that** the first heat exchanger (21) and the second heat exchanger (22) of each chamber (1, 2) are connected heat-conductively to one another.

8. Refrigeration apparatus according to one of Claims 1 to 7, **characterized in that** a circulating-air fan (24) is mounted in each chamber (1, 2) such that the air in the associated chamber (1, 2) can be conducted as circulating air through the heat exchangers (21, 22, 23).

9. Refrigeration and/or heating apparatus according to one of Claims 1 to 8, **characterized in that** the refrigeration apparatus has an electric compressor drive (6).

10. Vehicle (18) with a vehicle engine (19) and with a refrigeration apparatus according to one of Claims 1 to 9.

11. Refrigeration and/or heating method for setting different desired temperatures in at least a first (1) and a second (2) chamber by means of a heat transport medium, the heat transport medium circulating in a common closed heat transport circuit (3), circuit into which the heat transport medium can be compressed and heated in a compressor (4), cooled in at least one cooler (7) and supplied for expansion and further cooling to an expansion apparatus (9), each chamber (1, 2) having a first heat exchanger (21) for refrigeration by means of the heat transport medium and having a second heat exchanger (22) for defrosting and/or for heating of the chamber (1, 2) in case that its temperature is below a predetermined temperature, **characterized in that** there can be a changeover between different operating states of the heat transport circuit (3) by means of valves (12, 13, 14), with the result that the heat transport medium can be supplied, selectively compressed and hot or, after cooling and expansion, cold, to the chambers (1, 2) to maintain different temperatures in them, and **in that** when a given chamber needs to be heated, the compressed heat transport medium, before its cooling and expansion, can flow through the second heat exchanger (22) of the considered chamber but cannot flow through the first heat exchanger (21) of said considered chamber.

12. Refrigeration and/or heating method according to Claim 11, **characterized in that** an automatic control unit (15) controls the valves (12, 13, 14) in order to perform said different operating states of the heat transport circuit (3) as a function of the temperatures in the chambers (1, 2).

13. Refrigeration and/or heating method according to Claim 12, **characterized in that** said automatic control unit (15) allows in particular a first operating state of the heat transport circuit (3), in which the heat transport medium, after its cooling and expansion, flows through all the chambers (1, 2), and a second operating state of the heat transport circuit (3), in which the heat transport medium, after its cooling and expansion, does not flow through at least one of the chambers (1, 2), but instead, the compressed heat transport medium, before its cooling and expansion, flows through at least one of the chambers (1, 2).

14. Refrigeration and/or heating method according to one of Claims 11 to 13, **characterized in that** a main valve (12) is mounted between the compressor (4) and the cooler (7) and **in that** between the compressor (4) and the main valve (12), a branch line (10) branches off, which is connected in parallel to the second heat exchanger (22) of each chamber (1, 2), and **in that** when a given chamber needs to be heated, the compressed heat transport medium, before its cooling and expansion, flows through said branch line (10) to the second heat exchanger (22) of the considered chamber, and is routed from the second heat exchangers (22) of the considered chamber (1, 2) via a return line (11) into the line between the main valve (12) and the cooler (7).

15. Refrigeration and/or heating method according to one of Claims 11 to 14, **characterized in that** a third heat exchanger (23) is additionally used for sharp cooling or alternatively to the first heat exchanger (21) in each chamber (1, 2), low-temperature liquid nitrogen (LIN) from a nitrogen tank (35) being evaporated in the third heat exchanger (23), and the heat required for evaporation being extracted from the chamber (1, 2).

## Patentansprüche

1. Kühl- und/oder Heizvorrichtung, die zumindest eine erste (1) und eine zweite (2) Kammer aufweist, die thermisch voneinander isoliert sind, wobei jede Kammer (1, 2) einen ersten Wärmetauscher (21) zum Kühlen mittels eines Wärmetransportmediums aufweist und einen zweiten Wärmetauscher (22) zum Abtauen und/oder Heizen der Kammer (1, 2) aufweist für den Fall, dass deren Temperatur unterhalb einer vorbestimmten Temperatur liegt, und das Wärmetransportmedium für alle Kammern (1, 2) in einem gemeinsamen geschlossenen Wärmetransportkreis (3) geführt wird, der zumindest einen ersten Kompressor (4) zum Komprimieren und Heizen des Wärmetransportmediums und zumindest einen Kühler (7) zum Kühlen des komprimierten Wärmetransportmediums und ebenfalls zumindest einen Auffangbehälter (9) für das Expandieren und weitere Kühlen des Wärmetransportmediums aufweist, in welchem Wärmetransportkreis (3) die ersten Wärmetauscher (21) in jedem Fall parallel zueinander und in jedem Fall mit einem Kühlkreisventil (14) versehen zwischen dem Auffangbehälter (9) und dem Kompressor (4) integriert sind, **dadurch gekennzeichnet, dass** es eine Hauptleitung (20) mit einem Hauptventil (12) in dem Wärmetransportkreis (3) zwischen dem Kompressor (4) und dem Kühler (7) gibt und dadurch, dass die zweiten Wärmetauscher (22) jeder mit einem Absperrventil (13) versehen sind und parallel zueinander derart an den Wärmetransportkreis (3) angeschlossen sind, dass jeder von ihnen das Hauptventil (12) überbrücken kann, wobei zwischen dem Kompressor (4) und dem Hauptventil (12) eine Abzweigleitung (10) abzweigt, die parallel zu dem zweiten Wärmetauscher (22) jeder Kammer (1, 2) angeschlossen ist, was in Abhängigkeit von den Temperaturen in den Kammern (1, 2) verschiedene Betriebszustände des Wärmetransportkreises (3) und vor allem die Tatsache erlaubt, dass wenn eine gegebene Kammer geheizt werden muss, das komprimierte Wärmetransportmedium vor seinem Kühlen und Expandieren durch den zweiten Wärmetauscher (22) der betrachteten Kammer fließen kann, aber nicht durch den ersten Wärmetauscher (21) der betrachteten Kammer fließen kann.

2. Kühl- und/oder Heizvorrichtung nach Anspruch 1, **dadurch gekennzeichnet, dass** eine Temperatursensoreinheit (26) in jeder Kammer (1, 2) und das Hauptventil (12) und ebenfalls die Absperrventile (13) und die Kühlkreisventile (14) über Steuerleitungen (16) an eine automatische Steuereinheit (15) angeschlossen sind, und die automatische Steuereinheit (15) dazu ausgelegt ist, die verschiedenen Betriebszustände des Wärmetransportkreises (3) in Abhängigkeit von den Temperaturen in den Kammern (1, 2) zu steuern.

3. Kühl- und/oder Heizvorrichtung nach Anspruch 2, **dadurch gekennzeichnet, dass** die automatische Steuereinheit (15) insbesondere einen ersten Zustand erlaubt, in dem das Wärmetransportmedium nach seinem Kühlen und Expandieren durch die ersten Wärmetauscher (21) aller der Kammern (1, 2) fließen kann, das Wärmetransportmedium dagegen nicht durch die zweiten Wärmetauscher (22) aller der Kammern (1, 2) fließen kann, und einen zweiten Zustand, in dem das Wärmetransportmedium nicht durch den ersten Wärmetauscher (21) von zumindest einer der Kammern (1, 2) fließen kann, aber das komprimierte Wärmetransportmedium vor seinem Kühlen und Expandieren durch den zweiten Wärmetauscher (22) dieser Kammer fließen kann.

4. Kühl- und/oder Heizvorrichtung nach einem der Ansprüche 1 bis 3, **dadurch gekennzeichnet, dass** jede Kammer (1, 2) zusätzlich Mittel zum Kühlen mit tiefkalter Temperatur, bevorzugt Flüssigstickstoff, insbesondere einen dritten Wärmetauscher (23) aufweist, durch den der tiefkalte Stickstoff fließen kann.

5. Kühlvorrichtung nach einem der Ansprüche 1 bis 4, **dadurch gekennzeichnet, dass** in jeder Kammer (1, 2) die Wärmetauscher (21, 22, 23) in einer gemeinsamen Wärmetauschersäule (25), bevorzugt übereinander, angeordnet sind.

6. Kühlvorrichtung nach einem der Ansprüche 1 bis 5, **dadurch gekennzeichnet, dass** eine Rücklaufleitung (11), die zwischen dem Hauptventil (12) und dem Kühler (7) endet, von dem zweiten Wärmetauscher (22) jeder Kammer (1, 2) zu dem Kreis führt, wobei das Absperrventil (13) von jedem zweiten Wärmetauscher (22) in der Abzweigleitung (10) oder in der Rücklaufleitung (11) angeordnet ist.

7. Kühlvorrichtung nach einem der Ansprüche 1 bis 6, **dadurch gekennzeichnet, dass** der erste Wärmetauscher (21) und der zweite Wärmetauscher (22) von jeder Kammer (1, 2) wärmeleitend aneinander angeschlossen sind.

8. Kühlvorrichtung nach einem der Ansprüche 1 bis 7, **dadurch gekennzeichnet, dass** ein Umluftlüfter (24) derart in jeder Kammer (1, 2) eingebaut ist, dass die Luft in der zugehörigen Kammer (1, 2) als Umluft durch die Wärmetauscher (21, 22, 23) geleitet werden kann.

9. Kühl- und/oder Heizvorrichtung nach einem der Ansprüche 1 bis 8, **dadurch gekennzeichnet, dass** die Kühlvorrichtung einen elektrischen Kompressorantrieb (6) aufweist.

10. Fahrzeug (18) mit einem Fahrzeugmotor (19) und mit einer Kühlvorrichtung nach einem der Ansprüche 1 bis 9.

11. Kühl- und/oder Heizverfahren zum Einstellen verschiedener Solltemperaturen in zumindest einer ersten (1) und einer zweiten (2) Kammer mittels eines Wärmetransportmediums, wobei das Wärmetransportmedium in einem gemeinsamen geschlossenen Wärmetransportkreis (3) zirkuliert, in welchem Kreis das Wärmetransportmedium in einem Kompressor (4) komprimiert und erhitzt, in zumindest einem Kühler (7) gekühlt und zum Expandieren und weiteren Kühlen einer Expansionsvorrichtung (9) zugeführt werden kann, wobei jede Kammer (1, 2) einen ersten Wärmetauscher (21) zum Kühlen mittels des Wärmetransportmediums aufweist und einen zweiten Wärmetauscher (22) zum Abtauen und/oder zum Heizen der Kammer (1, 2) aufweist für den Fall, dass deren Temperatur unterhalb einer vorbestimmten Temperatur liegt, **dadurch gekennzeichnet, dass** es eine Umschaltung zwischen verschiedenen Betriebszuständen des Wärmetransportkreises (3) mittels Ventilen (12, 13, 14) geben kann, mit dem Ergebnis, dass das Wärmetransportmedium wahlweise komprimiert und heiß oder, nach Kühlen und Expandieren kalt, den Kammern (1, 2) zugeführt werden kann, um verschiedene Temperaturen in ihnen aufrecht zu erhalten, und dadurch, dass wenn eine gegebene Kammer geheizt werden muss, das komprimierte Wärmetransportmedium vor seinem Kühlen und Expandieren durch den zweiten Wärmetauscher (22) der betrachteten Kammer fließen kann, aber nicht durch den ersten Wärmetauscher (21) der betrachteten Kammer fließen kann.

12. Kühl- und/oder Heizverfahren nach Anspruch 11, **dadurch gekennzeichnet, dass** eine automatische Steuereinheit (15) die Ventile (12, 13, 14) steuert, um die verschiedenen Betriebszustände des Wärmetransportkreises (3) in Abhängigkeit von den Temperaturen in den Kammern (1, 2) auszuführen.

13. Kühl- und/oder Heizverfahren nach Anspruch 12, **dadurch gekennzeichnet, dass** die automatische Steuereinheit (15) insbesondere einen ersten Betriebszustand des Wärmetransportkreises (3) erlaubt, in dem das Wärmetransportmedium nach seinem Kühlen und Expandieren durch alle die Kammern (1, 2) fließt, und einen zweiten Betriebszustand des Wärmetransportkreises (3), in dem das Wärmetransportmedium nach seinem Kühlen und Expandieren durch zumindest eine der Kammern (1, 2) nicht fließt, sondern stattdessen das komprimierte Wärmetransportmedium vor seinem Kühlen und Expandieren durch zumindest eine der Kammern (1, 2) fließt.

14. Kühl- und/oder Heizverfahren nach einem der Ansprüche 11 bis 13, **dadurch gekennzeichnet, dass** ein Hauptventil (12) zwischen dem Kompressor (4) und dem Kühler (7) eingebaut ist und dadurch, dass zwischen dem Kompressor (4) und dem Hauptventil (12) eine Abzweigleitung (10) abzweigt, die parallel zu dem zweiten Wärmetauscher (22) jeder Kammer (1, 2) angeschlossen ist, und dadurch, dass wenn eine gegebene Kammer geheizt werden muss, das komprimierte Wärmetransportmedium vor seinem Kühlen und Expandieren durch die Abzweigleitung (10) zu dem zweiten Wärmetauscher (22) der betrachteten Kammer fließt und von den zweiten Wärmetauschern (22) der betrachteten Kammer (1, 2) über eine Rücklaufleitung (11) in die Leitung zwischen dem Hauptventil (12) und dem Kühler (7) geführt wird.

15. Kühl- und/oder Heizverfahren nach einem der Ansprüche 11 bis 14, **dadurch gekennzeichnet, dass** ein dritter Wärmetauscher (23) zusätzlich zum scharfen Kühlen oder alternativ zu dem ersten Wärmetauscher (21) in jeder Kammer (1, 2) verwendet wird, wobei tiefkalter Flüssigstickstoff (LIN) aus einen Stickstofftank (35) in dem dritten Wärmetauscher (23) verdampft wird, und die für das Verdampfen erforderliche Wärme aus der Kammer (1, 2) abgezogen wird.

## Revendications

1. Appareil de réfrigération et/ou de chauffage présentant au moins une première (1) et une seconde (2) chambre isolées thermiquement l'une de l'autre, chaque chambre (1, 2) présentant un premier échangeur de chaleur (21) pour la réfrigération à l'aide d'un moyen de transport de chaleur et présentant un deuxième échangeur de chaleur (22) pour dégeler et/ou pour chauffer la chambre (1, 2) au cas où sa température est inférieure à une température prédéterminée, et le moyen de transport de chaleur pour toutes les chambres (1, 2) étant acheminé dans un circuit de transport de chaleur fermé commun (3) qui présente au moins un premier compresseur (4) pour compresser et chauffer le moyen de transport de chaleur et au moins un refroidisseur (7) pour refroidir le moyen de transport de chaleur compressé et aussi au moins un récipient de collecte (9) pour l'expansion et le refroidissement supplémentaire du moyen de transport de chaleur, dans lequel circuit de transport de chaleur (3) les premiers échangeurs de chaleur (21) sont incorporés, dans chaque cas parallèlement l'un à l'autre et dans chaque cas dotés d'une valve de circuit de réfrigération (14), entre le récipient de collecte (9) et le compresseur (4), **caractérisé en ce qu'**il y a une ligne principale (20) avec une valve principale (12) dans le circuit de transport de chaleur (3) entre le compresseur (4) et le refroidisseur (7) et **en ce que** les seconds échangeurs de chaleur (22) sont chacun dotés d'une valve d'arrêt (13) et sont reliés parallèlement l'un à l'autre au circuit de transport de chaleur (3) de sorte que chacun d'eux puisse ponter la valve principale (12), dans lequel entre le compresseur (4) et la valve principale (12), une ligne secondaire (10) bifurque, laquelle est reliée parallèlement au deuxième échangeur de chaleur (22) de chaque chambre (1, 2), permettant, en fonction des températures dans les chambres (1, 2), différents états de fonctionnement du circuit de transport de chaleur (3), et notamment le fait que lorsqu'une chambre donnée doit être chauffée, le moyen de transport de chaleur compressé avant son refroidissement et son expansion, peut s'écouler au travers du deuxième échangeur de chaleur (22) de la chambre considérée mais ne peut pas s'écouler au travers du premier échangeur de chaleur (21) de ladite chambre considérée.

2. Appareil de réfrigération et/ou de chauffage selon la revendication 1, **caractérisé en ce qu'**une unité de capteur de température (26) dans chaque chambre (1, 2) et la valve principale (12) et aussi les valves d'arrêt (13) et les valves de circuit de réfrigération (14) sont reliées à une unité de commande automatique (15) par le biais de lignes de commande (16), et l'unité de commande automatique (15) étant conçue pour commander lesdits différents états de fonctionnement du circuit de transport de chaleur (3) en fonction des températures dans les chambres (1, 2).

3. Appareil de réfrigération et/ou de chauffage selon la revendication 2, **caractérisé en ce que** ladite unité de commande automatique (15) permet en particulier un premier état, dans lequel le moyen de transport de chaleur, après son refroidissement et son expansion, peut s'écouler au travers des premiers échangeurs de chaleur (21) de toutes les chambres (1, 2) alors que le moyen de transport de chaleur ne peut pas s'écouler au travers des seconds échangeurs de chaleur (22) de toutes les chambres (1, 2), et un second état, dans lequel le moyen de transport de chaleur ne peut pas s'écouler au travers du premier échangeur de chaleur (21) d'au moins une des chambres (1, 2) mais le moyen de transport de chaleur compressé, avant son refroidissement et son expansion, peut s'écouler au travers du deuxième échangeur de chaleur (22) de cette chambre.

4. Appareil de réfrigération et/ou de chauffage selon l'une des revendications 1 à 3, **caractérisé en ce que** chaque chambre (1, 2) présente en outre des moyens pour la réfrigération à basse température, de préférence de l'azote liquide, en particulier un troisième échangeur de chaleur (23) au travers duquel l'azote basse température peut s'écouler.

5. Appareil de réfrigération selon l'une des revendications 1 à 4, **caractérisé en ce que** dans chaque chambre (1, 2), les échangeurs de chaleur (21, 22, 23) sont agencés dans une colonne d'échange de chaleur commune (25), de préférence l'un au-dessus de l'autre.

6. Appareil de réfrigération selon l'une des revendications 1 à 5, **caractérisé en ce qu'**une ligne de retour (11) mène du deuxième échangeur de chaleur (22) de chaque chambre (1, 2) au circuit, lequel se termine entre la valve principale (12) et le refroidisseur (7), la valve d'arrêt (13) de chaque deuxième échangeur de chaleur (22) étant agencée dans la ligne secondaire (10) ou dans la ligne de retour (11).

7. Appareil de réfrigération selon l'une des revendications 1 à 6, **caractérisé en ce que** le premier échangeur de chaleur (21) et le deuxième échangeur de chaleur (22) de chaque chambre (1, 2) sont reliés par conduction de chaleur l'un à l'autre.

8. Appareil de réfrigération selon l'une des revendications 1 à 7, **caractérisé en ce qu'**un ventilateur à air de circulation (24) est monté dans chaque chambre (1, 2) de sorte que l'air dans la chambre associée (1, 2) puisse être conduit comme air de circulation au travers des échangeurs de chaleur (21, 22, 23).

9. Appareil de réfrigération et/ou de chauffage selon l'une des revendications 1 à 8, **caractérisé en ce que** l'appareil de réfrigération présente un entraînement à compresseur électrique (6).

10. Véhicule (18) avec un moteur de véhicule (19) et avec un appareil de réfrigération selon l'une des revendications 1 à 9.

11. Procédé de réfrigération et/ou de chauffage pour le réglage de différentes températures souhaitées dans au moins une première (1) et une seconde (2) chambre à l'aide d'un moyen de transport de chaleur, le moyen de transport de chaleur circulant dans un circuit de transport de chaleur fermé commun (3), circuit dans lequel le moyen de transport de chaleur peut être compressé et chauffé dans un compresseur (4), refroidi dans au moins un refroidisseur (7) et fourni pour expansion et refroidissement supplémentaire à un appareil d'expansion (9), chaque chambre (1, 2) présentant un premier échangeur de chaleur (21) pour la réfrigération à l'aide du moyen de transport de chaleur et présentant un deuxième échangeur de chaleur (22) pour dégeler et/ou pour chauffer la chambre (1, 2) au cas où sa température est inférieure à une température prédéterminée, **caractérisé en ce qu'**il peut y avoir un changement entre différents états de fonctionnement du circuit de transport de chaleur (3) à l'aide de valves (12, 13, 14), avec pour résultat que le moyen de transport de chaleur puisse être fourni, sélectivement compressé et chaud ou après refroidissement et expansion, froid, aux chambres (1, 2) pour maintenir des températures différentes dans celles-ci, et **en ce que** lorsqu'une chambre donnée doit être chauffée, le moyen de transport de chaleur compressé, avant son refroidissement et son expansion, peut s'écouler au travers du deuxième échangeur de chaleur (22) de la chambre considérée mais ne peut pas s'écouler au travers du premier échangeur de chaleur (21) de ladite chambre considérée.

12. Procédé de réfrigération et/ou de chauffage selon la revendication 11, **caractérisé en ce qu'**une unité de commande automatique (15) commande les valves (12, 13, 14) afin de réaliser lesdits différents états de fonctionnement du circuit de transport de chaleur (3) en fonction des températures dans les chambres (1, 2).

13. Procédé de réfrigération et/ou de chauffage selon la revendication 12, **caractérisé en ce que** ladite unité de commande automatique (15) permet en particulier un premier état de fonctionnement du circuit de transport de chaleur (3), dans lequel le moyen de transport de chaleur, après son refroidissement et expansion, s'écoule au travers de toutes les chambres (1, 2), et un second état de fonctionnement du circuit de transport de chaleur (3), dans lequel le moyen de transport de chaleur, après son refroidissement et expansion, ne s'écoule pas au travers d'au moins une des chambres (1, 2) mais à la place, le moyen de transport de chaleur compressé avant son refroidissement et expansion, s'écoule au travers d'au moins une des chambres (1, 2).

14. Procédé de réfrigération et/ou de chauffage selon l'une des revendications 11 à 13, **caractérisé en ce qu'**une valve principale (12) est montée entre le compresseur (4) et le refroidisseur (7) et **en ce qu'**entre le compresseur (4) et la valve principale (12), une ligne secondaire (10) bifurque, laquelle est reliée parallèlement au deuxième échangeur de chaleur (22) de chaque chambre (1, 2) et **en ce que** lorsqu'une chambre donnée doit être chauffée, le moyen de transport de chaleur compressé avant son refroidissement et son expansion, s'écoule au travers de ladite ligne secondaire (10) au deuxième échangeur de chaleur (22) de la chambre considérée, et est acheminé depuis les seconds échangeurs de chaleur (22) de la chambre considérée (1, 2) par le biais d'une ligne de retour (11) dans la ligne entre la valve principale (12) et le refroidisseur (7).

15. Procédé de réfrigération et/ou de chauffage selon l'une des revendications 11 à 14, **caractérisé en ce qu'**un troisième échangeur de chaleur (23) est en outre utilisé pour le refroidissement brutal ou alternativement au premier échangeur de chaleur (21) dans chaque chambre (1, 2), de l'azote liquide basse température (LIN) d'un réservoir d'azote (35) étant évaporé dans le troisième échangeur de chaleur (23), et la chaleur requise pour l'évaporation étant extraite de la chambre (1, 2).
